(19) Europäisches Patentamt
European Patent Office
Office européen des brevets

(11) **EP 4 725 904 A1**

(12) **EUROPEAN PATENT APPLICATION**
published in accordance with Art. 153(4) EPC

(43) Date of publication:
**15.04.2026 Bulletin 2026/16**

(21) Application number: **24819144.7**

(22) Date of filing: **21.05.2024**

(51) International Patent Classification (IPC):
**C01B 33/107** $^{(2006.01)}$  **B09B 3/40** $^{(2022.01)}$

(52) Cooperative Patent Classification (CPC):
**B09B 3/40; C01B 33/107**

(86) International application number:
**PCT/JP2024/018579**

(87) International publication number:
**WO 2024/252911 (12.12.2024 Gazette 2024/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.06.2023 JP 2023095256**

(71) Applicant: **Tokuyama Corporation**
**Shunan-shi, Yamaguchi 745-8648 (JP)**

(72) Inventors:
• **NAKANISHI, Hodaka**
**Shunan-shi, Yamaguchi 745-8648 (JP)**
• **OKIMOTO, Atsushi**
**Shunan-shi, Yamaguchi 745-8648 (JP)**
• **IIYAMA, Shoji**
**Shunan-shi, Yamaguchi 745-8648 (JP)**

(74) Representative: **Schlegel, Sebastian**
**Boehmert & Boehmert**
**Anwaltspartnerschaft mbB**
**Pettenkoferstraße 22**
**80336 München (DE)**

(54) **CHLOROSILANE PRODUCTION METHOD**

(57)    The present disclosure provides a method for producing chlorosilanes, the method including generating the chlorosilanes by reacting a silicon source with hydrogen chloride, or with tetrachlorosilane and hydrogen, the silicon source containing at least one selected from the group consisting of monocrystalline silicon and polycrystalline silicon each recovered from a solar panel. It is preferable that a content of the at least one selected from the group consisting of the monocrystalline silicon and the polycrystalline silicon be 1 part by mass to 99 parts by mass in 100 parts by mass of the silicon source.

EP 4 725 904 A1

**Description**

Technical Field

The present invention relates to a method for producing chlorosilanes. More specifically, the present invention relates to a method for producing chlorosilanes including trichlorosilane, by reacting a silicon source with hydrogen chloride or with tetrachlorosilane and hydrogen.

Background Art

**In** pursuit of achieving a low-carbon society, efforts are being made to accelerate $CO_2$ reduction through the utilization of renewable energy sources, including solar power generation. The structure of a typical solar cell module used for solar power generation consists of three layers: a surface made of tempered glass, an encapsulant resin layer inside, and a backsheet on the rear. Within the encapsulant resin layer, solar cells composed of monocrystalline or polycrystalline silicon are arranged and connected via wires (interconnectors). The encapsulant resin is required to possess transparency, flexibility, adhesiveness, tensile strength, weather resistance and the like, and ethylene-vinyl acetate copolymer (hereinafter abbreviated as "EVA") is commonly used as the encapsulant resin. The encapsulant resin serves to bond the tempered glass, the cells, and the backsheet together when heat and pressure are applied. While the adoption of solar power generation has significantly progressed, recycling challenges associated with the disposal of solar cell modules have been pointed out.

When the above solar cell module is heated in an oxidizing atmosphere using an electric furnace or the like, the EVA melts at 80°C to 120°C, a deacetylation reaction of the EVA occurs at around 350°C, and a thermal decomposition reaction of a polyethylene portion, which constitutes a main chain, occurs rapidly at around 450°C. Techniques for recycling solar cell modules through such a thermal decomposition is disclosed (see Patent Literatures 1 and 2).

There is also a method proposed for efficiently and easily recovering valuable materials by slowly and stably combusting and removing resin components, instead of reducing the oxygen concentration in a heating furnace, in order to suppress the rapid combustion of the EVA contained in the solar cell module (see Patent Literature 3).

By the above method, the resin components of the backsheet, the encapsulant resin layer, and the like are removed from the solar cell module, so that the glass, the cells, an aluminum frame, and the like can be separated and recovered.

Citation List

[Patent Literature]

[Patent Literature 1]
Japanese Patent Application Publication, Tokukaihei, No. 11-165150
[Patent Literature 2]
Japanese Patent Application Publication, Tokukai, No. 2007-59793
[Patent Literature 3]
International Publication No. WO2020/031661
[Patent Literature 4]
Korean Patent Application Publication No. 10-2023-0033968
[Patent Literature 5]
Chinese Patent Application Publication No. 115353111

Summary of Invention

Technical Problem

The glass, the aluminum frame, and the like recovered by the above method can be recycled for solar cell modules or other applications. However, the cells recovered by the above method, though primarily composed of polycrystalline silicon or monocrystalline silicon, have adhered thereon a metal component of a wiring material and the like and a resin component for an adhesive, which have been used in the construction of the solar cell module. As such, further means of purification is necessary in order to directly use the recovered cells as materials for cell production.

For example, a method has been proposed that includes a primary acid leaching step of adding an acid leaching solution to a crushed waste solar silicon and stirring the resultant solution while leaching out impurities contained in the waste solar silicon (see Patent Literature 4). Further, there have been proposed methods such as one in which (i) a recovered solar panel is disassembled, immersed in a $FeCl_3$ solution, and pickled with hydrochloric acid, (ii) part of organic materials is decomposed by heating at 330°C to 380°C, and then (iii) crushing into powder, purification by melting and refining, and subsequent solidification are carried out to obtain regenerated silicon (see Patent Literature 5).

These methods, in which silicon cells recovered from a solar cell module are purified to be recycled for use in a solar cell module again, require many purification steps. A simpler recycle method has therefore been desired.

As such, an object of the present invention is to provide a method for recycling, by a simple method, silicon cells recovered from a solar cell module.

Solution to Problem

The inventors of the present invention have conducted diligent study to address the above-described problem. The inventors conducted an analysis of impurities in polycrystalline silicon and monocrystalline silicon recovered from solar cell modules. As a result, a metal component (e.g., aluminum) originating from a wiring material and an organic substance originating from a resin were found. Accordingly, the inventors conducted a study on methods for recycling the polycrystalline silicon and the monocrystalline silicon. As a result, it was found that by using the polycrystalline silicon and the monocrystalline silicon as a silicon source in obtaining chlorosilanes such as trichlorosilane through a reaction of silicon with hydrogen chloride or with tetrachlorosilane and hydrogen, it was possible to efficiently produce the chlorosilanes. Moreover, the obtained chlorosilanes were of a quality equivalent to that of chlorosilanes produced using metallic silicon. Thus, the inventors found that impurities originating from the polycrystalline silicon and the monocrystalline silicon (metal impurities and a carbon component originating from a resin) can be removed by conventional methods for purifying chlorosilanes, and consequently completed the present invention.

Specifically, a production method in accordance with an aspect of the present invention is a method for producing chlorosilanes, the method including generating the chlorosilanes by reacting a silicon source with hydrogen chloride or with tetrachlorosilane and hydrogen, the silicon source containing at least one selected from the group consisting of monocrystalline silicon and polycrystalline silicon each recovered from a solar panel.

Advantageous Effects of Invention

By the production method in accordance with an aspect of the present invention, polycrystalline silicon and monocrystalline silicon recovered from solar cell modules can be efficiently used as raw materials (i.e., silicon sources) for the production of chlorosilanes. In order for the polycrystalline silicon and the monocrystalline silicon to be used for cells of a solar cell module, it is necessary to remove a metal component originating from a wiring material and an organic substance originating from a resin, by highly purifying the polycrystalline silicon and the monocrystalline silicon. However, in the present invention, the metal component and the organic substance can be removed by a known purification method after chlorosilanes are produced. The present invention therefore makes it is possible to use the polycrystalline silicon and the monocrystalline silicon as silicon sources for the production of chlorosilanes, without the need for highly purifying the polycrystalline silicon and the monocrystalline silicon.

Description of Embodiments

A production method in accordance with an aspect of the present invention is a method for producing chlorosilanes, the method including generating the chlorosilanes by reacting a silicon source with hydrogen chloride or with tetrachlorosilane and hydrogen, the method characterized in that the silicon source contains at least one selected from the group consisting of monocrystalline silicon and polycrystalline silicon each recovered from a solar panel. As described above, silicon cells recovered from a solar cell module are primarily composed of polycrystalline silicon and monocrystalline silicon. The polycrystalline silicon and the monocrystalline silicon contain impurities such as a metal component (e.g., aluminum) used as a wiring material and an organic substance originating from a resin material. As such, when using the silicon cells as silicon for a solar cell module, it is necessary to highly remove these impurities.

Meanwhile, in production of polysilicon for semiconductors or solar cells, metallic silicon is reacted with hydrogen chloride or with tetrachlorosilane and hydrogen, to convert the metallic silicon into trichlorosilane. Then, trichlorosilane is purified, and then the purified trichlorosilane is reduced with hydrogen to obtain polysilicon. Further, in the reaction of the metallic silicon with the hydrogen chloride, tetrachlorosilane is produced as a by-product along with trichlorosilane. As such, the tetrachlorosilane is recovered and reacted with metallic silicon and hydrogen to produce trichlorosilane. Therefore, by using polycrystalline silicon or monocrystalline silicon recovered from a solar cell module in place of the above metallic silicon, it is possible to obtain high-purity trichlorosilane.

**In** metallic silicon, metal components such as iron, aluminum, or calcium are contained. These metal components have the effect of promoting a reaction of metallic silicon with hydrogen chloride, or with tetrachlorosilane and hydrogen, by acting catalytically in the reaction. However, these catalyst components, when present in excess, accumulate in a reaction vessel during the reaction, and reduce the fluidity of the silicon source in the reaction vessel or affect the efficiency of purification of chlorosilanes after the reaction. Polycrystalline silicon or monocrystalline silicon recovered from a solar cell module contains, on a surface thereof, aluminum originating from a wiring material, but contains no iron or calcium or a very small amount of iron or calcium. As such, when polycrystalline silicon or monocrystalline silicon recovered from a solar cell module is used as a silicon source for producing trichlorosilane or the like without undergoing extensive purification, accumulation of iron and calcium in the reaction vessel can be suppressed, so that stable production of chlorosilanes is possible over an extended period of time.

In the present specification, unless otherwise specified, the notation "A to B" with respect to numerical values A and B means "not less than A and not more than B". In such notation, where only the numerical value B is accompanied by a unit, the same unit shall be deemed to apply to the numerical value A as well. The method for producing chlorosilanes in accordance with an aspect of the present invention will be described in detail below.

<Method for producing a chlorosilane>

In the method for producing chlorosilanes in accordance with an aspect of the present invention, a silicon source is reacted with hydrogen chloride to produce the chlorosilanes. This generation reaction is represented by the following formula (1).

$$(1): \qquad Si+3HCl \rightarrow SiHCl_3+H_2$$

Further, as a side reaction, tetrachlorosilane is produced as a by-product, as represented by the following formula (2).

$$(2): \qquad Si+4HCl \rightarrow SiCl_4+2H_2$$

Further, although in a trace amount, dichlorosilane is also produced as a by-product.

Meanwhile, tetrachlorosilane ($SiCl_4$) produced as a by-product in production of polysilicon is converted into trichlorosilane and reused for the production of polysilicon. In this production method, trichlorosilane is generated from metallic silicon, tetrachlorosilane, and hydrogen through the reaction represented by the following reaction formula (3).

$$(3): \qquad 3SiCl_4+2H_2+Si \rightarrow 4SiHCl_3$$

The method for producing chlorosilanes in accordance with an aspect of the present invention can be used in any of the above production processes.

<Silicon source>

The above-described production method in accordance with an aspect of the present invention is characterized in that at least one selected from the group consisting of monocrystalline silicon and polycrystalline silicon each recovered from a solar panel (hereinafter collectively referred to as "recovered silicon") is contained as a silicon source. Regarding a method for recovering monocrystalline silicon and polycrystalline silicon from a solar panel, monocrystalline silicon and polycrystalline silicon recovered by a known method can be used. Among these, it is preferable to use polycrystalline silicon recovered from a solar panel, from the perspective of reactivity in the above-described reaction of chlorosilanes. Specific examples of the method for recovering monocrystalline silicon and polycrystalline silicon includes methods such as the one described in Patent Literature 3. The method described in Patent Literature 3 is a method for recovering monocrystalline silicon or polycrystalline silicon from a waste solar panel containing the monocrystalline silicon or the polycrystalline silicon, by (i) heating the waste solar panel to thermally melt a resin within the panel, (ii) combusting the thermally melted resin, and (iii) subsequently recovering the monocrystalline silicon or the polycrystalline silicon from the waste solar panel.

The recovered silicon contains impurities such as a metal component (e.g., aluminum) and an organic substance originating from a resin material. In the production method in accordance with an aspect of the present invention, it is also possible to use the impuritiescontaining recovered silicon as is. However, in a case where the contents of these impurities are too high, the impurities may not be sufficiently removed in the purification process after the reaction. It is therefore preferable that the content of each impurity in at least one type of the recovered silicon be any of the contents below. It should be noted that each content described below refers to an amount contained per 100 parts by mass of at least one type of the recovered silicon.

· Aluminum: Preferably 50 ppm by mass to 3,000,000 ppm by mass, more preferably 50 ppm by mass to 300,000 ppm by mass, even more preferably 50 ppm by mass to 10,000 ppm by mass, and particularly preferably 50 ppm by mass to 1,000 ppm by mass.

Iron: Preferably not more than 100 ppm by mass, more preferably 50 ppm by mass to 90 ppm by mass, and particularly preferably 60 ppm by mass to 90 ppm by mass.

· Calcium: Preferably not more than 100 ppm by mass, more preferably 1 ppm by mass to 90 ppm by mass, and particularly preferably 1 ppm by mass to 80 ppm by mass.

· Carbon: Preferably not more than 500 ppm by mass, more preferably 1 ppm by mass to 300 ppm by mass, and particularly preferably 1 ppm by mass to 100 ppm by mass.

The contents of metal components in the silicon source or the recovered silicon, namely aluminum, iron, and calcium, can be measured by X-ray fluorescence spectroscopy (XRF). Low concentration ranges (not more than 100 ppm by mass) of the above metal elements can be measured by dissolving the silicon source in hydrofluoric-nitric acid, subsequently filtering the resultant solution, and subjecting the filtrate to high-frequency inductively coupled plasma optical emission spectrometry (ICP-OES). The carbon content of the silicon source or the recovered silicon can be determined by measuring CO and $CO_2$ using the combustion-infrared absorption method.

In a case where the contents of the impurities in the recovered silicon are too high, for example, the surface of the recovered silicon obtained from the waste solar panel may be cleaned using an acid such as hydrochloric acid, nitric acid, sulfuric acid, or hydrofluoric acid, or an alkali such as sodium hydroxide or potassium hydroxide. After the cleaning, the recovered silicon can be cleaned with pure water and dried to reduce the impurities to a desired range.

The particle size of the recovered silicon used as the silicon source is not particularly limited. From the perspective of reactivity with hydrogen chloride or with tetrachlorosilane and hydrogen, the particle size is preferably 30 $\mu$m to 2,000 $\mu$m, more preferably 50 $\mu$m to 1,000 $\mu$m, and particularly preferably 50 $\mu$m to 500 $\mu$m.

In the production method in accordance with an aspect of the present invention, it is sufficient that at least one type of the recovered silicon be contained as the silicon source, and the entirety of the silicon source may consist of the recovered silicon. Further, as the recovered silicon, a combination of recovered silicon that has been subjected to the above cleaning and recovered silicon that has not been subjected to the cleaning may be used. Alternatively, the recovered silicon and metallic silicon, which will be described later, may be mixed together and used. As described above, in the reaction of metallic silicon with hydrogen chloride, or with tetrachlorosilane and hydrogen, metal components such as iron, aluminum, or calcium have the effect of promoting the reaction by acting catalytically.

As such, when using these as the silicon source, the contents of metal components such as iron, aluminum, or calcium in the silicon source may be adjusted as needed. Specifically, when the recovered silicon and metallic silicon, which will be described later, are mixed together and used, the content of the recovered silicon in 100 parts by mass of the silicon source is preferably 1 part by mass to 99 parts by mass, more preferably 50 parts by mass to 99 parts by mass, and particularly preferably 80 parts by mass to 95 parts by mass.

<Metallic silicon>

As the metallic silicon used in the above reaction, any known metallurgical grade silicon, ferrosilicon, or the like can be used without any particular limitation. Furthermore, with respect to impurities such as an iron compound contained in the metallic silicon, there are no particular limitations on their composition or content. Such metallic silicon is typically used in the form of fine powder with an average particle size of approximately 100 $\mu$m to 500 $\mu$m.

<Hydrogen chloride>

The hydrogen chloride used in the reaction with the silicon source may be used without any particular limitation, even if hydrogen or the like is mixed in the hydrogen chloride. However, in general, chlorosilanes such as trichlorosilane, tetrachlorosilane, and dichlorosilane are highly hydrolyzable and thus react with moisture. As such, in a case where the hydrogen chloride contains moisture, there is a risk of reducing the yield of the produced trichlorosilane. It is therefore preferable for the hydrogen chloride to be in a dry state.

<Hydrogen>

The hydrogen used in the reaction with the silicon source is not particularly limited, and pure hydrogen or hydrogen recovered after the reaction of the silicon source with hydrogen chloride, or with tetrachlorosilane and hydrogen, can be used. Similar to the above-described hydrogen chloride, it is preferable for the hydrogen to be in a dry state.

<Reaction of silicon source with hydrogen chloride, or with tetrachlorosilane and hydrogen>

In the reaction of the silicon source with hydrogen chloride, or with tetrachlorosilane and hydrogen, a catalyst is preferably used from the viewpoint of efficiently producing trichlorosilane. As such a catalyst, any known catalyst component for the reaction of the silicon source with hydrogen chloride, or with tetrachlorosilane and hydrogen, can be used without particular limitation.

Specific examples of such a catalyst component include the aforementioned aluminum, iron, and calcium, as well as metals or chlorides of Group 8 to Group 10 elements such as cobalt, nickel, palladium, and platinum, and metals or chlorides such as copper and titanium. These catalysts can be used individually or in combination of two or more thereof. The amount of the above catalyst component to be used is not particularly limited as long as the amount is sufficient to efficiently produce trichlorosilane, and the amount may be appropriately determined in consideration of factors such as the capacity of the manufacturing device. Generally, it is sufficient to use the catalytic component in an amount of 0.05% by weight to 40% by weight, and particularly 0.1% by weight to 5% by weight, relative to the metallic silicon, in terms of the metallic element content.

As described above, the recovered silicon contains aluminum, and when the recovered silicon and metallic silicon are mixed together and used, the metallic silicon contains aluminum, iron, and calcium. As such, in the production method in accordance with an aspect of the present invention, it is preferable that the recovered silicon and the metallic silicon be mixed such that the contents of the catalyst components in the silicon source fall within the ranges below. Note that each content in the following description refers to a content per 100 parts by mass of the silicon source.

· Aluminum: Preferably 50 ppm by mass to 20,000 ppm by mass, more preferably 500 ppm by mass to 10,000 ppm by mass, and particularly preferably 600 ppm by mass to 6,000 ppm by mass.
· Iron: Preferably 50 ppm by mass to 10,000 ppm by mass, more preferably 50 ppm by mass to 5,000 ppm by mass, and particularly preferably 1,000 ppm by mass to 3,000 ppm by mass.
· Calcium: Preferably 50 ppm by mass to 5,000 ppm by mass, more preferably 50 ppm by mass to 3,000 ppm by mass, and particularly preferably 50 ppm by mass to 500 ppm by mass.

Similarly as in the above description, the contents of metal components in the silicon source or the recovered silicon, namely aluminum, iron, and calcium, can be measured by X-ray fluorescence spectroscopy (XRF). Low concentration ranges (not more than 100 ppm by mass) of the above metal elements can be measured by dissolving the silicon source in hydrofluoric-nitric acid, subsequently filtering the resultant solution, and subjecting the filtrate to high-frequency inductively coupled plasma optical emission spectrometry (ICP-OES). The carbon content of the silicon source or the recovered silicon can be determined by measuring CO and $CO_2$ using the combustion-infrared absorption method.

The above catalyst components may be present by being added to the reaction system; however, in a case where the silicon source to be used contains catalyst components such as aluminum, iron, or calcium as impurities, these impurities can be effectively utilized as catalyst components. Of course, even when metallic silicon containing catalyst components as impurities are used, there is no issue in further adding catalyst components to the reaction system to enhance the reactivity of the silicon source with hydrogen chloride, or with tetrachlorosilane and hydrogen.

In the reaction of the silicon source with hydrogen chloride, or with tetrachlorosilane and hydrogen, any known reaction device can be used without particular limitation. Specific examples of such reaction devices include a fixed-bed reaction device and a fluidized-bed reaction device. Among the above reaction devices, it is preferable to use a fluidized-bed reaction device because the use allows for the continuous supply of the silicon source and hydrogen chloride, or tetrachlorosilane and hydrogen, so that trichlorosilane can be continuously produced. Furthermore, since the above reaction involves both exothermic and endothermic reactions, the use of a fluidized-bed reaction device is also preferred from the viewpoint of achieving a uniform temperature distribution in the reaction zone.

The reaction temperature for the reaction of the silicon source with hydrogen chloride, or with tetrachlorosilane and hydrogen, may be appropriately determined by taking into account factors such as the material and capacity of the manufacturing device. In a case where the reaction temperature is excessively high, the selectivity for trichlorosilane decreases, and the amount of by-product chlorosilanes other than trichlorosilane, such as tetrachlorosilane and dichlorosilane, increases. The reaction of the silicon source with hydrogen chloride is an exothermic reaction, and the reaction temperature is generally set in the range of 250°C to 400°C.

The reaction temperature for the reaction of the silicon source with tetrachlorosilane and hydrogen is an endothermic reaction, and the reaction temperature is generally set in the range of 400°C to 700°C, particularly in the range of 450°C to 600°C.

<Condensation separation and distillation of chlorosilanes>

Through the reaction of the silicon source with hydrogen chloride, or with tetrachlorosilane and hydrogen, a reaction product gas containing trichlorosilane is generated. The reaction product gas contains a by-product chlorosilane other than trichlorosilane, such as tetrachlorosilane or dichlorosilane, and also contains by-product hydrogen as well as boron and other substances, which are unavoidably included as impurities in the silicon source.

As such, when recovering trichlorosilane from the above reaction product gas, the reaction product gas may first be passed through an appropriate filter to remove solid substances such as silicon source particles, and then subjected to condensation separation. Chlorosilanes, including trichlorosilane, are condensed and separated from the reaction product gas which has been passed through the filter.

**In** this condensation separation step, in which the reaction product gas is cooled, the cooling temperature only needs to be below the condensation temperatures of the various chlorosilanes and can be appropriately determined taking into account factors such as the cooling capacity of a cooling device. As the cooling temperature decreases, the removal effect of chlorosilanes tends to increase. Generally, however, a cooling temperature of not more than -10°C, particularly not more than -30°C, is sufficient. The pressure during the condensation separation is not particularly limited, provided that chlorosilanes can be sufficiently removed. The pressure may be appropriately determined taking into account factors such as the capacity of a condensation removal device. Generally, a pressure of not less than 300 kPaG, particularly not less than 500 kPaG, is sufficient.

Cooling means for performing condensation is not particularly limited and the condensation can be carried out using known cooling means, provided that the reaction product gas can be cooled to the above cooling temperature. Specific examples of such cooling means include cooling means in which the reaction product gas is cooled by being passed through a heat exchanger that has been cooled, or cooling means in which the reaction product gas is cooled by the condensate that has been condensed and cooled. These methods can be employed individually or in combination.

Further, for the purpose of increasing the pressure of the gas, a pressurizing device can also be provided prior to the condensation removal of chlorosilanes. Additionally, for the protection of the pressurizing device, preliminary condensation of chlorosilanes, a filter, or the like, can also be provided upstream of the pressurizing device. These aspects can be adopted as standard measures in industrial process design.

The condensate obtained from the reaction product gas through condensation separation as described above is a mixture of various chlorosilanes. By distillation, trichlorosilane can be isolated, and the recovered trichlorosilane is used as a deposition raw material in the process for producing polysilicon.

The exhaust gas after the condensation separation of chlorosilanes contains hydrogen gas as a main component, and can be used as a hydrogen source for various production processes, such as hydrogen in the above production of chlorosilanes.

Aspects of the present invention can also be expressed as follows:

A method for producing chlorosilanes in accordance with Aspect 1 of the present invention is a method including generating the chlorosilanes by reacting a silicon source with hydrogen chloride, or with tetrachlorosilane and hydrogen, wherein the silicon source contains at least one selected from the group consisting of monocrystalline silicon and polycrystalline silicon each recovered from a solar panel.

A method for producing chlorosilanes in accordance with Aspect 2 of the present invention is preferably configured such that, in Aspect 1, a content of the at least one selected from the group consisting of the monocrystalline silicon and the polycrystalline silicon is 1 part by mass to 99 parts by mass in 100 parts by mass of the silicon source.

A method for producing chlorosilanes in accordance with Aspect 3 of the present invention is preferably configured such that, in Aspect 1 or 2, a content of aluminum is 50 ppm by mass to 20,000 ppm by mass in 100 parts by mass of the silicon source.

A method for producing chlorosilanes in accordance with Aspect 4 of the present invention is preferably configured such that, in any one of Aspects 1 to 3, a content of iron is 50 ppm by mass to 10,000 ppm by mass in 100 parts by mass of the silicon source.

A method for producing chlorosilanes in accordance with Aspect 5 of the present invention is preferably configured such that, in any one of Aspects 1 to 4, a content of calcium is 50 ppm by mass to 5,000 ppm by mass in 100 parts by mass of the silicon source.

A method for producing chlorosilanes in accordance with Aspect 6 of the present invention is preferably configured such that, in any one of Aspects 1 to 5, a content of carbon is 10 ppm by mass to 10,000 ppm by mass in 100 parts by mass of the silicon source.

A method for producing chlorosilanes in accordance with Aspect 7 of the present invention is preferably configured such that, in any one of Aspects 1 to 6, a content of aluminum is 50 ppm by mass to 300,000 ppm by mass per 100 parts by mass of the at least one selected from the group consisting of the monocrystalline silicon and the polycrystalline silicon in the silicon source.

A method for producing chlorosilanes in accordance with Aspect 8 of the present invention is preferably configured such that, in any one of Aspects 1 to 7, a content of iron is not more than 100 ppm by mass per 100 parts by mass of the at least one selected from the group consisting of the monocrystalline silicon and the polycrystalline silicon in the silicon source.

A method for producing chlorosilanes in accordance with Aspect 9 of the present invention is preferably configured such that, in any one of Aspects 1 to 8, a content of calcium is not more than 100 ppm by mass per 100 parts by mass of the at least one selected from the group consisting of the monocrystalline silicon and the polycrystalline silicon in the silicon source.

A method for producing chlorosilanes in accordance with Aspect 10 of the present invention is preferably configured such that, in any one of Aspects 1 to 9, a content of carbon is not more than 500 ppm by mass per 100 parts by mass of the at least one selected from the group consisting of the monocrystalline silicon and the polycrystalline silicon in the silicon source.

A method for producing chlorosilanes in accordance with Aspect 11 of the present invention is preferably configured such that, in any one of Aspects 1 to 10, the monocrystalline silicon and the polycrystalline silicon recovered from the solar panel includes a product obtained by: recovering monocrystalline silicon or polycrystalline silicon from the solar panel; and cleaning, with acid, a surface of the monocrystalline silicon or the polycrystalline silicon thus obtained.

Examples

The following will further describe the present invention through Examples; however, the present invention is in no way limited to these Examples.

<Silicon source>

In the following Examples, the silicon sources used were as follows.

Uncleaned recovered silicon: A material obtained by heating a waste solar panel containing monocrystalline silicon to melt the resin within the waste solar panel, combusting the melted resin, and subsequently recovering the silicon from the waste solar panel. Cleaned recovered silicon: A material obtained by immersing the above uncleaned recovered silicon in 35% hydrochloric acid for 1 hour, followed by drying.

Metallic silicon: A commercially available product.

Ferrosilicon: A commercially available product.

Silicon-copper alloy: A mixture of a commercially available product and metallic silicon.

The contents of aluminum, iron, calcium, and copper in each silicon source were measured by X-ray fluorescence spectroscopy (XRF) (ZSX Primus IV (manufactured by Rigaku Corporation)). Low concentration ranges (not more than 100 ppm by mass) of the above metal elements were measured by high-frequency inductively coupled plasma optical emission spectrometry (ICP-OES) (Optima 8300 (manufactured by PerkinElmer)). Further, the carbon content was determined by measuring CO and $CO_2$ using the combustion-infrared absorption method (EMIA-110 (manufactured by HORIBA, Ltd.)). The contents of the elements in each silicon source are shown in Table 1.

[Table 1]

Table 1

|  | Si | Al | Fe | Ca | C | Cu |
| --- | --- | --- | --- | --- | --- | --- |
|  | wt. % | wt. % | wt. % | wt. % | wt. % | wt. % |
| Uncleaned recovered silicon | 85.92 | 13.75 | 0.006 | 0.302 | 0.021 | 0 |
| Cleaned recovered silicon | 99.97 | 0.012 | 0.006 | 0.005 | 0.003 | 0 |
| Metallic silicon | 99.48 | 0.114 | 0.286 | 0.097 | 0.023 | 0 |
| Ferrosilicon | 97.54 | 0.124 | 2.289 | 0.035 | 0.016 | 0 |
| Silicon-copper alloy | 91.42 | 0.131 | 0.293 | 0.027 | 0.020 | 8.11 |

<Reaction of silicon source with hydrogen chloride>

A stainless steel (SUS) reaction tube with an inner diameter of 8 mm was filled with 10 g of a silicon source. The reactor was maintained at 350°C, and hydrogen chloride gas and hydrogen gas were continuously supplied to the reactor at a rate of 50 mL/min each for 250 minutes. Exhaust gas from the reactor was cooled to -70°C to obtain a condensate.

The supply of the hydrogen chloride gas and the hydrogen gas was stopped, and the reactor was allowed to cool.

A reaction residue was removed from the reactor and weighed. With use of the amount of the silicon source with which the reactor had been filled, the reaction rate (%) of the silicon source was calculated using the formula below, and the results are shown in Table 2.

Reaction rate (%) = ((Amount of silicon source with which container had been filled) - (Amount of reaction residue)) / (Amount of silicon source with which container had been filled) $\times$ 100

After the reaction was completed, the reaction residue was visually inspected to check for the presence of silicon blocks with a particle size of not less than 1 mm. The above obtained condensate was analyzed using gas chromatography to measure the content of methyl dichlorosilane (MDCS). The presence of silicon blocks, which are aggregates of the reaction residue of silicon, indicates a deterioration in fluidity and a decline in reactivity within the reactor during long-term operation.

<Example 1>

A mixture of 98 parts by mass of cleaned recovered silicon and 2 parts by mass of uncleaned recovered silicon was used as the silicon source to carry out the above-described production. As a result, the reaction rate was 16%, and very few silicon blocks were observed. The content of methyl dichlorosilane (MDCS) was 0.3 ppma. Table 2 shows the contents of iron, calcium, aluminum, and carbon in the silicon source used, the reaction rate, the presence or absence of silicon blocks, and the content of MDCS.

<Examples 2 to 5 and Comparative Example 1>

Production was carried out in the same manner as in Example 1, except that the silicon sources indicated in the table were used in the amounts indicated in Table 2. The reaction rate and the content of MDCS are shown as relative values, with the results of Example 1 set as 1. The results are indicated in Table 2. Even in cases where recovered silicon was used, it was possible, by preparing the impurity content, to improve the reaction rate to a level comparable to that achieved using metallic silicon. Meanwhile, it is presumed that the amount of silicon blocks, which can cause poor fluidity, was small because recovered silicon contained less calcium compared to metallic silicon. Furthermore, since recovered silicon also contained less carbon compared to metallic silicon, less MDCS originating from carbon was generated, so that chlorosilanes with higher purity were obtained.

[Table 2]

Table 2

| | | Example 1 | Example 2 | Example 3 | Example 4 | Example 5 | Comp. Example 1 |
|---|---|---|---|---|---|---|---|
| Composition of silicon source (wt. %) | Cleaned recovered silicon | 98 | 90 | 88 | 86 | 30 | 0 |
| | Uncleaned recovered silicon | 2 | 0 | 2 | 4 | 0 | 0 |
| | Metallic silicon | 0 | 0 | 0 | 0 | 70 | 100 |
| Impurity content in 100 parts by mass of silicon source (wt. %) | Ferrosilicon | 0 | 10 | 10 | 10 | 0 | 0 |
| | Al | 0.29 | 0.02 | 0.30 | 0.57 | 0.08 | 0.11 |
| | Fe | 0.01 | 0.23 | 0.23 | 0.23 | 0.20 | 0.29 |
| | Ca | 0.011 | 0.008 | 0.014 | 0.020 | 0.069 | 0.097 |
| | C | 0.004 | 0.005 | 0.005 | 0.005 | 0.017 | 0.023 |

(continued)

| | | Example 1 | Example 2 | Example 3 | Example 4 | Example 5 | Comp. Example 1 |
|---|---|---|---|---|---|---|---|
| Evaluation result | Reaction rate | 1.0 | 0.2 | 3.4 | 4.5 | 1.5 | 4.2 |
| | Amount of silicon blocks | Small | Small | Small | Small | Small | Large |
| | MDCS content | 1.0 | 1.0 | 1.7 | 0.7 | 4.3 | 6.3 |

<Reaction of silicon source with tetrachlorosilane and hydrogen>

A stainless steel (SUS) reaction tube with an inner diameter of 8 mm was filled with 3.0 g of a silicon source. The reactor was maintained at 530°C, and tetrachlorosilane gas and hydrogen gas were continuously supplied to the reactor at flow rates of 40 mL/min and 110 mL/min, respectively, for 300 minutes. Exhaust gas from the reactor was cooled to - 70°C to obtain a condensate.

The supply of the tetrachlorosilane gas and the hydrogen gas was stopped, and the reactor was allowed to cool. A reaction residue was removed from the reactor and weighed. With use of the amount of the silicon source with which the reactor had been filled, the reaction rate (%) of the silicon source was calculated using the formula below, and the results are shown in Table 3.

Reaction rate (%) = ((Amount of silicon source with which container had been filled) - (Amount of reaction residue)) / (Amount of silicon source with which container had been filled) $\times$ 100

<Example 6>

A mixture of 98 parts by mass of cleaned recovered silicon and 2 parts by mass of uncleaned recovered silicon was used as the silicon source to carry out the above-described production. As a result, the reaction rate was 0.14%. That is, the reaction scarcely occurred. Table 3 shows the contents of iron, calcium, aluminum, carbon, and copper in the silicon source used, along with the reaction rate.

<Examples 7 and 8 and Comparative Examples 2 and 3>

Production was carried out in the same manner as in Example 6, except that the silicon sources indicated in Table 3 were used in the amounts indicated in Table 3. The reaction rate is shown as a relative value, with the result of Example 6 set as 1. The results are indicated in Table 3. Even in cases where recovered silicon was used, it was possible, by preparing the impurity content, to improve the reaction rate to a level comparable to that achieved using metallic silicon.

[Table 3]

Table 3

| | | Example 6 | Example 7 | Example 8 | Comp. Example 2 | Comp. Example 3 |
|---|---|---|---|---|---|---|
| | | Recovered silicon alone | recovered silicon + Ferrosilicon | recovered silicon + Ferrosilicon + Silicon-copper alloy | Metallic silicon alone | Metallic silicon + Ferrosilicon + Silicon-copper alloy |
| Silicon source and its content (wt. %) | Cleaned recovered silicon | 98 | 88 | 78 | 0 | 0 |
| | Uncleaned recovered silicon | 2 | 2 | 2 | 0 | 0 |
| | Metallic silicon | 0 | 0 | 0 | 100 | 80 |
| | Ferrosilicon | 0 | 10 | 10 | 0 | 10 |
| | Silicon-copper alloy | 0 | 0 | 10 | 0 | 10 |
| Impurity content in 100 parts by mass of silicon source (wt. %) | Al | 0.29 | 0.30 | 0.31 | 0.11 | 0.12 |
| | Fe | 0.006 | 0.234 | 0.263 | 0.286 | 0.487 |
| | Ca | 0.011 | 0.014 | 0.016 | 0.097 | 0.083 |
| | C | 0.0037 | 0.0050 | 0.0066 | 0.0233 | 0.0222 |
| | Cu | 0.00 | 0.00 | 0.81 | 0.00 | 0.81 |
| Evaluation result | Reaction rate | 1.0 | 22.5 | 46.5 | 25.0 | 42.0 |

**Claims**

1. A method for producing chlorosilanes, the method comprising generating the chlorosilanes by reacting a silicon source with hydrogen chloride or with tetrachlorosilane and hydrogen,
   the silicon source containing at least one selected from the group consisting of monocrystalline silicon and polycrystalline silicon each recovered from a solar panel.

2. The method as set forth in claim 1, wherein a content of the at least one selected from the group consisting of the monocrystalline silicon and the polycrystalline silicon is 1 part by mass to 99 parts by mass in 100 parts by mass of the silicon source.

3. The method as set forth in claim 1 or 2, wherein a content of aluminum is 50 ppm by mass to 20,000 ppm by mass in 100 parts by mass of the silicon source.

4. The method as set forth in claim 1 or 2, wherein a content of iron is 50 ppm by mass to 10,000 ppm by mass in 100 parts by mass of the silicon source.

5. The method as set forth in claim 1 or 2, wherein a content of calcium is 50 ppm by mass to 5,000 ppm by mass in 100 parts by mass of the silicon source.

6. The method as set forth in claim 1 or 2, wherein a content of carbon is 10 ppm by mass to 10,000 ppm by mass in 100 parts by mass of the silicon source.

7. The method as set forth in claim 1 or 2, wherein a content of aluminum is 50 ppm by mass to 300,000 ppm by mass per 100 parts by mass of the at least one selected from the group consisting of the monocrystalline silicon and the polycrystalline silicon in the silicon source.

8. The method as set forth in claim 1 or 2, wherein a content of iron is not more than 100 ppm by mass per 100 parts by mass of the at least one selected from the group consisting of the monocrystalline silicon and the polycrystalline silicon in the silicon source.

9. The method as set forth in claim 1 or 2, wherein a content of calcium is not more than 100 ppm by mass per 100 parts by mass of the at least one selected from the group consisting of the monocrystalline silicon and the polycrystalline silicon in the silicon source.

10. The method as set forth in claim 1 or 2, wherein a content of carbon is not more than 500 ppm by mass per 100 parts by mass of the at least one selected from the group consisting of the monocrystalline silicon and the polycrystalline silicon in the silicon source.

11. The method as set forth in claim 1 or 2, wherein the monocrystalline silicon and the polycrystalline silicon that are recovered from the solar panel includes a product obtained by:

- recovering monocrystalline silicon or polycrystalline silicon from the solar panel; and
- cleaning, with acid, a surface of the monocrystalline silicon or the polycrystalline silicon thus obtained.

# EP 4 725 904 A1

## INTERNATIONAL SEARCH REPORT

| International application No. |
|---|
| **PCT/JP2024/018579** |

### A. CLASSIFICATION OF SUBJECT MATTER

***C01B 33/107***(2006.01)i; ***B09B 3/40***(2022.01)i
FI: C01B33/107 Z; B09B3/40

According to International Patent Classification (IPC) or to both national classification and IPC

### B. FIELDS SEARCHED

Minimum documentation searched (classification system followed by classification symbols)

C01B33/107; B09B3/40

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | US 2010/0032630 A1 (HARIHARAN, Alleppey V.) 11 February 2010 (2010-02-11) claims 1-63, paragraphs [0010]-[0011], fig. 8 | 1-11 |
| A | WO 2018/131500 A1 (TOKUYAMA CORPORATION) 19 July 2018 (2018-07-19) entire text, all drawings | 1-11 |
| A | WO 2019/122567 A1 (ROSI) 27 June 2019 (2019-06-27) entire text, all drawings | 1-11 |
| A | CN 103303925 A (APOLLO TECH CO., LTD.) 18 September 2013 (2013-09-18) entire text, all drawings | 1-11 |
| A | JP 2011-068520 A (JX NIPPON OIL & ENERGY CORPORATION) 07 April 2011 (2011-04-07) entire text, all drawings | 1-11 |

| ☐ Further documents are listed in the continuation of Box C. | ☑ See patent family annex. |
|---|---|

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **19 July 2024** | **30 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/018579**

| Patent document cited in search report | | | Publication date (day/month/year) | Patent family member(s) | | | Publication date (day/month/year) |
|---|---|---|---|---|---|---|---|
| US | 2010/0032630 | A1 | 11 February 2010 | WO | 2010/017231 | A1 | |
| WO | 2018/131500 | A1 | 19 July 2018 | US | 2019/0375642 | A1 | |
| | | | | entire text, all drawings | | | |
| | | | | EP | 3569573 | A1 | |
| | | | | CN | 110167878 | A | |
| | | | | KR | 10-2019-0104532 | A | |
| WO | 2019/122567 | A1 | 27 June 2019 | JP | 2021-508311 | A | |
| | | | | entire text, all drawings | | | |
| | | | | US | 2021/0009431 | A1 | |
| | | | | FR | 3075776 | A | |
| | | | | KR | 10-2020-0100144 | A | |
| | | | | CN | 111699155 | A | |
| CN | 103303925 | A | 18 September 2013 | KR | 10-2013-0103841 | A | |
| JP | 2011-068520 | A | 07 April 2011 | US | 2012/0244059 | A1 | |
| | | | | entire text, all drawings | | | |
| | | | | WO | 2011/036897 | A1 | |
| | | | | EP | 2481707 | A1 | |
| | | | | CN | 102656116 | A | |

Form PCT/ISA/210 (patent family annex) (July 2022)

## REFERENCES CITED IN THE DESCRIPTION

**Patent documents cited in the description**

- JP 11165150 A
- JP 2007059793 A
- WO 2020031661 A
- KR 1020230033968
- CN 115353111